(19) Europäisches Patentamt / European Patent Office / Office européen des brevets

(11) **EP 4 079 693 A1**

(12) **EUROPEAN PATENT APPLICATION**
published in accordance with Art. 153(4) EPC

(43) Date of publication:
**26.10.2022 Bulletin 2022/43**

(21) Application number: **20903930.4**

(22) Date of filing: **17.12.2020**

(51) International Patent Classification (IPC):
*C01G 53/00* (2006.01)    *H01M 4/36* (2006.01)
*H01M 4/505* (2010.01)    *H01M 4/525* (2010.01)

(52) Cooperative Patent Classification (CPC):
**C01G 53/00; H01M 4/36; H01M 4/505;
H01M 4/525;** Y02E 60/10

(86) International application number:
**PCT/JP2020/047166**

(87) International publication number:
**WO 2021/125271 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.12.2019 JP 2019227470**

(71) Applicant: **SUMITOMO CHEMICAL COMPANY,
LIMITED
Tokyo 103-6020 (JP)**

(72) Inventor: **TAKAMORI Kenji
Niihama-shi, Ehime 792-8521 (JP)**

(74) Representative: **Vossius & Partner
Patentanwälte Rechtsanwälte mbB
Siebertstraße 3
81675 München (DE)**

(54) **LITHIUM METAL COMPOSITE OXIDE POWDER, POSITIVE ELECTRODE ACTIVE MATERIAL FOR LITHIUM SECONDARY CELL, POSITIVE ELECTRODE FOR LITHIUM SECONDARY CELL, AND LITHIUM SECONDARY CELL**

(57)    The present invention relates to a lithium metal composite oxide powder having a layered structure, and comprising at least Li, Ni, and an element X, wherein: said element X is at least one element selected from the group consisting of Co, Mn, Fe, Cu, Ti, Mg, Al, W, Mo, Nb, Zn, Sn, Zr, Ga, V, B, Si, S, and P; and the lithium metal composite oxide powder satisfies requirements (1), (2), and (3):
(1) an angle of difference ($\theta 1 - \theta 2$) calculated from an angle of repose ($\theta 1$) and an angle of fall ($\theta 2$) is 15° or less, wherein the angle of repose ($\theta 1$) is an angle of slope of the lithium metal composite oxide powder piled on a measurement table, and the angle of fall ($\theta 2$) is an angle of slope measured after application of a predetermined impact force to the measurement table;
(2) an average primary particle diameter is 1 $\mu$m or more; and
(3) an amount of water contained in the lithium metal composite oxide powder is 1000 ppm or less.

EP 4 079 693 A1

**Description**

[Technical Field]

The present invention relates to a lithium metal composite oxide powder, a positive electrode active material for a lithium secondary battery, a positive electrode for a lithium secondary battery, and a lithium secondary battery.
Priority is claimed on Japanese Patent Application No. 2019-227470, filed December 17, 2019, the content of which is incorporated herein by reference.

[Background Art]

Lithium secondary batteries have already been put to practical use not only in small power sources for mobile phones, laptop computers and the like, but also in medium-sized or large-sized power sources for automobiles, electricity storage applications and the like. A lithium secondary battery has a positive electrode for a lithium secondary battery provided with a positive electrode active material. A lithium metal composite oxide powder is used as the positive electrode active material.
The positive electrode for a lithium secondary battery is produced by a production method including the following steps.
First, a positive electrode active material for a lithium secondary battery (hereinafter referred to as "positive electrode active material"), a binder and a conductive material are kneaded in a solvent using a kneader to obtain a paste-like electrode mix.
Next, the obtained electrode mix is uniformly applied to the surface of the metal foil which is a current collector.
Then, the current collector coated with the electrode mix is dried and then, if necessary, pressure bonded to increase the density of the positive electrode active material layer. As a result, a positive electrode for a lithium secondary battery having an electrode mix layer formed on the current collector can be obtained.
In the kneading step at the time of producing the paste-like electrode mix, it is easy to obtain an electrode mix in which the positive electrode active material powder, the conductive material, and the binder are uniformly dispersed by using the positive electrode active material powder with a specific fluidity. With such an electrode mix, lumps are unlikely to be formed in the electrode mix. Therefore, the electrode mix can be uniformly applied on the current collector.
Furthermore, in a case where a pressure bonding step is performed to increase the density of the positive electrode active material layer, a positive electrode for a lithium secondary battery in which the conductive material is uniformly distributed inside the electrode mix layer can be obtained by using the electrode mix as described above. Such a positive electrode for a lithium secondary battery has high electron conductivity in the electrode mix layer, and the battery performance is improved.
Patent Document 1 describes a production method focusing on the angle of repose of the positive electrode active material powder in order to produce an aggregated granular lithium composite metal oxide with high fluidity.

[Citation List]

[Patent Document]

[Patent Document 1] JP-A-2001-80920

[Summary of Invention]

[Technical Problem]

When the fluidity of the positive electrode active material powder is not within a specific range, an electrode mix in which the positive electrode active material powder is unevenly dispersed is produced. In the electrode mix layer produced by using such an electrode mix, the conductive material is unevenly distributed in the electrode mix layer. There is a difference in electron conductivity between the portion where the conductive material is concentrated and the portion where the conductive material is dispersed. The use of such an electrode mix causes an increase in internal resistance of the battery and deterioration of battery performance.
The fluidity of the positive electrode active material powder produced by the method described in Patent Document 1 is not sufficient, and there is room for improvement from the viewpoint of improving the kneading property.
In the present specification, "high kneading property" means a state in which each component is uniformly mixed without partial aggregation or unkneaded portion when the components constituting the electrode such as positive electrode active material powder, binder, conductive material, and the like are kneaded.

The present invention has been made in view of the above circumstances, with an object of providing a lithium metal composite oxide powder having high kneading property, a positive electrode active material for a lithium secondary battery, a positive electrode for a lithium secondary battery, and a lithium secondary battery.

[Solution to Problem]

That is, the present invention includes the following inventions [1] to [9].

[1] A lithium metal composite oxide powder having a layered structure, and including at least Li, Ni, and an element X, wherein:

said element X is at least one element selected from the group consisting of Co, Mn, Fe, Cu, Ti, Mg, Al, W, Mo, Nb, Zn, Sn, Zr, Ga, V, B, Si, S, and P; and
the lithium metal composite oxide powder satisfies requirements (1), (2), and (3):

(1) an angle of difference ($\theta 1 - \theta 2$) calculated from an angle of repose ($\theta 1$) and an angle of fall ($\theta 2$) is 15° or less, wherein the angle of repose ($\theta 1$) is an angle of slope of the lithium metal composite oxide powder piled on a measurement table, and the angle of fall ($\theta 2$) is an angle of slope measured after application of a predetermined impact force to the measurement table;
(2) an average primary particle diameter is 1 $\mu$m or more; and
(3) an amount of water contained in the lithium metal composite oxide powder is 1000 ppm or less.

[2] The lithium metal composite oxide powder according to [1], wherein the angle of repose ($\theta 1$) is 40° or less.
[3] The lithium metal composite oxide powder according to [1] or [2], wherein the angle of fall ($\theta 2$) is 35° or less.
[4] The lithium metal composite oxide powder according to any one of [1] to [3], wherein an amount of residual sulfate radical is 1.0% by mass or less.
[5] The lithium metal composite oxide powder according to any one of [1] to [4],
wherein a difference ($D_{20} - D_{10}$) between values of 20% cumulative diameter ($D_{20}$) and 10% cumulative diameter ($D_{10}$) as determined by particle size distribution measurement is 1 $\mu$m or less.
[6] The lithium metal composite oxide powder according to any one of [1] to [5],
wherein the lithium metal composite oxide powder includes core particles and a coating material covering the core particles.
[7] A positive electrode active material for a lithium secondary battery, which includes the lithium metal composite oxide powder of any one of [1] to [6].
[8] A positive electrode for a lithium secondary battery, which includes the positive electrode active material of [7].
[9] A lithium secondary battery including the positive electrode of [8].

[Advantageous Effects of Invention]

According to the present invention, it is possible to provide a lithium metal composite oxide powder having high kneading property, a positive electrode active material for a lithium secondary battery, a positive electrode for a lithium secondary battery, and a lithium secondary battery.

[Brief Description of Drawings]

FIG. 1A is a schematic configuration diagram showing an example of a lithium secondary battery.
FIG. 1B is a schematic configuration diagram showing an example of a lithium secondary battery.
FIG. 2 is a schematic diagram showing an example of an all-solid-state lithium secondary battery.

[Description of Embodiments]

In the present specification, a metal composite compound is hereinafter referred to as "MCC", a lithium metal composite oxide is hereinafter referred to as "LiMO", and a positive electrode (cathode) active material for lithium secondary batteries is hereinafter referred to as "CAM".

<LiMO powder>

The LiMO powder of the present embodiment is a LiMO powder having a layered structure.

The LiMO powder of the present embodiment includes at least Li, Ni, and an element X.

The element X is at least one element selected from the group consisting of Co, Mn, Fe, Cu, Ti, Mg, Al, W, Mo, Nb, Zn, Sn, Zr, Ga, V, B, Si, S, and P.

The LiMO powder of the present embodiment satisfies all of the following requirements (1), (2), and (3).

<<Requirements (1)>>

In the LiMO powder of the present embodiment, an angle of difference ($\theta1 - \theta2$) calculated from an angle of repose ($\theta1$) and an angle of fall ($\theta2$) measured by the following method is 15° or less

In the present embodiment, the "angle of repose ($\theta1$)" is defined as an angle of slope of the LiMO powder piled on a measurement table. Examples of the method for piling LiMO powder include a general injection method.

In the present embodiment, the "angle of fall ($\theta2$)" is defined as an angle of slope measured after application of a predetermined impact force to the measurement table after measuring the angle of repose ($\theta1$).

For the measurement of the angle of repose ($\theta1$) and the angle of fall ($\theta2$), for example, measuring instrument of multi functional powder properties Multi Tester MT-02 manufactured by SEISHIN ENTERPRISE Co., Ltd. can be used.

In the present embodiment, the specific measuring methods of the angle of repose ($\theta1$) and the angle of fall ($\theta2$) are as follows.

[Measurement method of angle of repose]

The powder to be measured is dropped from a funnel of a certain height onto a horizontal substrate (measurement table), the base angle is calculated from the diameter and the height of the generated conical deposits, and this base angle is defined as the angle of repose ($\theta1$). Generally, the angle of repose can be measured based on JIS-R9301-2-2: 1999 (corresponding international standard: ISO 920: 1976).

As the height of the conical deposits, a length from the horizontal substrate to the highest point in the conical deposits in a direction orthogonal to the horizontal substrate can be adopted.

As the diameter of the conical deposits, the average of the diameters in four randomly selected directions in the bottom surface of the conical deposits can be adopted.

Further, as the diameter of the conical deposits, the average of the longest diameter and the minimum diameter of the bottom surface of the conical deposits can be adopted.

The base angle can be calculated from an isosceles triangle whose base is the diameter of the conical deposits and whose height is the height of the conical deposits obtained as described above.

[Measurement method of angle of fall]

After collapsing the conical deposits whose angle of repose is measured by applying a constant impact to the measurement table three times, the base angle is calculated from the diameter and the height of the collapsed conical deposits, and this base angle is defined as the angle of fall ($\theta2$).

As the height of the conical deposits, a length from the horizontal substrate to the highest point in the conical deposits in a direction orthogonal to the horizontal substrate can be adopted.

As the diameter of the conical deposits, the average of the diameters in four randomly selected directions in the bottom surface of the conical deposits can be adopted.

Further, as the diameter of the conical deposits, the average of the longest diameter and the minimum diameter of the bottom surface of the conical deposits can be adopted.

The base angle can be calculated from an isosceles triangle whose base is the diameter of the conical deposits and whose height is the height of the conical deposits obtained as described above.

In this context, the constant impact is an impact adopted in the measuring device used, and is unique and constant to the device. For the measurement of the angle of fall, for example, a measuring instrument of multi functional powder properties Multi Tester MT-02 manufactured by SEISHIN ENTERPRISE Co., Ltd. can be used.

Specifically, the constant impact is an impact when the energization time is 150 milliseconds in the measuring instrument of multi functional powder properties Multi Tester MT-02. The impact force in the measuring instrument is controlled by the energization time. Further, the impact test condition in the measuring instrument is a condition in which an impact force with an energization time of 150 milliseconds is applied three times.

[Measurement method of angle of difference]

The angle of difference can be calculated by the following formula.

$$\text{Angle of repose (°)} - \text{Angle of fall (°)} = \text{Angle of difference (°)}$$

In the present embodiment, the angle of difference ($\theta1$- $\theta2$) calculated from the angle of repose ($\theta1$) and the angle of fall ($\theta2$) is 15° or less, preferably 13° or less, more preferably 11° or less, and still more preferably 10° or less.

Further, the angle of difference ($\theta1$- $\theta2$) is preferably 3° or more, more preferably 4° or more, and particularly preferably 5° or more.

The upper limit values and lower limit values of the angle of difference ($\theta1$- $\theta2$) can be arbitrarily combined.

Examples of the combination include 3° or more and 15° or less, 4° or more and 13° or less, 5° or more and 11° or less, and 5° or more and 10° or less.

When the angle of difference ($\theta1$- $\theta2$) is large, flushing property tends to be high. Flushing property is a property that indicates the tendency of powder to scatter. The LiMO powder having a particle shape with high flushing property easily encloses air, and partial aggregations and unkneaded portions are likely to occur when a paste-like electrode mix is produced.

In the present embodiment, since the angle of difference ($\theta1$- $\theta2$) is not more than the above upper limit value, the LiMO powder has low flushing property and high fluidity. As a result, the LiMO powder is easy to handle and has high kneading property.

In the present embodiment, the angle of repose ($\theta1$) measured by the above measuring method is preferably 40° or less, more preferably 39° or less, still more preferably 38° or less, and particularly preferably 37° or less.

Examples of the lower limit of the angle of repose ($\theta1$) include 10° or more, 15° or more, and 20° or more.

The upper limit values and lower limit values can be arbitrarily combined. Examples of the combination include 10° or more and 40° or less, 10° or more and 39° or less, 15° or more and 38° or less, and 20° or more and 37° or less.

When the angle of repose ($\theta1$) is within the above range, the LiMO powder has a specific fluidity. Since the fluidity is not too high, it is easy to uniformly knead when producing a paste-like electrode mix. As a result, the LiMO powder has high kneading property.

In the present embodiment, the angle of fall ($\theta2$) measured by the above measuring method is preferably 35° or less, more preferably 33° or less, still more preferably 31° or less, and particularly preferably 28° or less.

Examples of the lower limit of the angle of fall ($\theta2$) include 5° or more, 10° or more, and 15° or more.

The upper limit values and lower limit values can be arbitrarily combined.

Examples of the combination include 5° or more and 35° or less, 5° or more and 33° or less, 10° or more and 31° or less, and 15° or more and 28° or less.

When the angle of fall ($\theta2$) is small, especially within the above range, the LiMO powder has high fluidity. As a result, the LiMO powder has high kneading property.

<<Requirements (2)>>

The average primary particle diameter of the LiMO powder of the present embodiment is 1 $\mu$m or more, preferably 1.1 $\mu$m or more, more preferably 1.2 $\mu$m or more, and particularly preferably 1.3 $\mu$m or more.

The average primary particle diameter is preferably 7 $\mu$m or less, more preferably 6.5 $\mu$m or less, still more preferably 6.0 $\mu$m or less, and particularly preferably 5.5 $\mu$m or less.

The upper limit values and lower limit values of the average primary particle diameter can be arbitrarily combined.

Examples of the combination include 1 $\mu$m or more and 7 $\mu$m or less, 1.1 $\mu$m or more and 6.5 $\mu$m or less, 1.2 $\mu$m or more and 6.0 $\mu$m or less, and 1.3 $\mu$m or more and 5.5 $\mu$m or less.

In the LiMO powder satisfying the requirement (2), the primary particles or the secondary particles contained in the LiMO powder are unlikely to adhere or aggregate with each other. For this reason, the LiMO powder has high fluidity. As a result, the LiMO powder has high kneading property.

The LiMO powder contains LiMO. The LiMO powder may further contain water or a sulfate radical. LiMO includes primary particles, or primary particles and secondary particles. LiMO may further includes a coating material described later.

The content ratio of LiMO with respect to the total mass of the LiMO powder is, for example, 95 to 100% by mass.

The ratio of the number of primary particles not forming secondary particles with respect to the total number of the number of primary particles not forming secondary particles and the number of secondary particles is, for example, 0.5 to 0.95.

[Primary particles]

In the present embodiment, the primary particles are defined as follows.

The primary particles are particles having no grain boundaries in appearance when observed at a magnification of 5,000 times using a scanning electron microscope (SEM). The primary particle diameter is, for example, 0.2 $\mu$m or more and 8 $\mu$m or less. The primary particles diameter can be measured by the method as described in the method for measuring the average primary particle diameter described later.

[Secondary particles]

In the present embodiment, the secondary particles are aggregates of primary particles. The lithium metal composite oxide may contain spherical or elliptical secondary particles that are formed by aggregation of ten or more primary particles. The secondary particle diameter is, for example, 1 to 50 $\mu$m. The secondary particles diameter can be measured by the same method as described in the method for measuring the average primary particle diameter described later.

In the present embodiment, the average primary particle diameter is obtained by the following method.

First, the LiMO powder was placed on a conductive sheet attached onto a sample stage, and SEM observation is carried out by radiating an electron beam with an accelerated voltage of 20 kV using a scanning electron microscope (SEM). 50 primary particles are randomly selected in an image (SEM photograph) obtained from the SEM observation, parallel lines is drawn from a certain direction so as to sandwich the projection image of each primary particle, and the distance between the parallel lines (Feret diameter) is measured as the primary particle diameter. The certain direction can be, for example, the horizontal direction in the obtained SEM photograph. The arithmetic average value of the obtained primary particle diameters is the average primary particle diameter.

As the scanning electron microscope, for example, a JSM-5510 manufactured by JEOL Ltd. can be used.

<<Requirements (3)>>

The amount of water contained in the LiMO powder with respect to the total mass of the LiMO powder is 1000 mass ppm or less, preferably 900 mass ppm or less, more preferably 800 mass ppm or less, and particularly preferably 700 mass ppm or less.

The amount of water may be 0 mass ppm or more, 10 mass ppm or more, 100 mass ppm or more, and 200 mass ppm or more.

The upper limit values and lower limit values can be arbitrarily combined.

Examples of the combination include 0 mass ppm or more and 1000 mass ppm or less, 10 mass ppm or more and 900 mass ppm or less, 100 mass ppm or more and 800 mass ppm or less, and 200 mass ppm or more and 700 mass ppm or less.

The amount of water in the LiMO powder can be measured using a moisture meter. As the moisture meter, for example, a coulometric method curl fisher moisture meter (831 Coulometer, manufactured by Metrohm Ltd.) can be used for measurement.

The LiMO powder that satisfies the requirement (3) and has a low water amount has high fluidity of the powder and can improve kneading property.

The amount of a sulfate radical contained in the LiMO powder of the present embodiment with respect to the total mass of the LiMO powder is preferably 1.0% by mass or less, preferably 0.9% by mass or less, more preferably 0.8% by mass or less, and still more preferably 0.7% by mass or less.

The amount of a sulfate radical may be 0% by mass or more, 0.1% by mass or more, and 0.2% by mass or more.

The upper limit values and lower limit values can be arbitrarily combined.

Examples of the combination include 0% by mass or more and 1.0% by mass or less, 0% by mass or more and 0.9% by mass or less, 0.1% by mass or more and 0.8% by mass or less, and 0.2% by mass or more and 0.7% by mass or less.

In the present specification, "sulfate radical" means $SO_4^2$ present in the particles contained in the LiMO powder after calcination step.

The amount of sulfate radical contained in the LiMO powder can be measured by the following method.

After dissolving the LiMO powder in hydrochloric acid, inductively coupled plasma emission spectrometry (ICP) is performed to measure the sulfur atomic weight.

Next, the measured sulfur atomic weight is converted into sulfate radical to obtain the amount of sulfate radical.

In the present embodiment, the difference ($D_{20}$ - $D_{10}$) between values of 20% cumulative diameter ($D_{20}$) and 10% cumulative diameter ($D_{10}$) as obtained from the particle size distribution measurement values is preferably 1 $\mu$m or less, more preferably 0.95 $\mu$m or less, and particularly preferably 0.9 $\mu$m or less.

Examples of the lower limit of the difference ($D_{20}$ - $D_{10}$) include 0.1 $\mu$m or more, 0.2 $\mu$m or more, and 0.3 $\mu$m or more.

The upper limit values and lower limit values can be arbitrarily combined.

Examples of the combination include 0.1 $\mu$m or more and 1 $\mu$m or less, 0.2 $\mu$m or more and 0.95 $\mu$m or less, 0.3 $\mu$m or more and 0.9 $\mu$m or less.

When the value of ($D_{20}$ - $D_{10}$) is not more than the above upper limit value, the amount of fine particles that affect the fluidity of the powder is small. As a result, the LiMO powder has high kneading property.

In the present embodiment, the lower limit value of 50% cumulative diameter ($D_{50}$) obtained from the particle size distribution measurement values is preferably 2.5 $\mu$m or more, more preferably 3 $\mu$m or more, and still more preferably 3.5 $\mu$m or more.

The upper limit value of 50% cumulative diameter ($D_{50}$) is preferably 9 $\mu$m or less, more preferably 8 $\mu$m or less, and still more preferably 7 $\mu$m or less.

The above upper limit values and lower limit values of 50% cumulative diameter ($D_{50}$) can be arbitrarily combined. In the present embodiment, 50% cumulative diameter ($D_{50}$) is preferably 2.5 $\mu$m or more and 9 $\mu$m or less, more preferably 3 $\mu$m or more and 8 $\mu$m or less, and still more preferably 3.5 $\mu$m or more and 7 $\mu$m or less.

[Particle size distribution measurement]

0.1 g of a LiMO powder to be measured is added to 50 ml of a 0.2% by mass aqueous sodium hexametaphosphate solution to obtain a dispersion liquid in which the LiMO powder is dispersed. The obtained dispersion is subjected to a particle size distribution measurement using a laser scattering particle size distribution measuring apparatus, whereby the volume-based particle size distribution curve is obtained.

From the obtained cumulative particle size distribution curve, the particle sizes at 10% cumulation measured from the smallest particle side is determined as the volume-based 10% cumulative particle size $D_{10}$ of the LiMO powder. Further, from the obtained cumulative particle size distribution curve, the particle sizes at 20% cumulation measured from the smallest particle side is determined as the volume-based 20% cumulative particle size $D_{20}$ of the LiMO powder. Further, from the obtained cumulative particle size distribution curve, the particle sizes at 50% cumulation measured from the smallest particle side is determined as the volume-based 50% cumulative particle size $D_{50}$ of the LiMO powder.

As the laser scattering particle size distribution measuring apparatus, for example, Mastersizer 2000, manufactured by Malvern Instruments Ltd can be used.

<<Coating material>>

The LiMO powder of the present embodiment preferably includes core particles and a coating material that covers the surface of the core particles. The coating material is preferably a coating layer or coating particles. In the present embodiment, the core particles are primary particles or secondary particles of the LiMO.

In the LiMO powder of the present embodiment, the element represented by X may constitute a core particle or a coating material. Among the elements represented by X, the elements constituting the coating material is referred to as element M. The element M is preferably one or more elements selected from Al, Ti, Zr, Nb, and W, and more preferably one or more elements selected from Al, Zr, Nb, and W. The coating material preferably contains a lithium-containing composite oxide of Li and element M.

The particle diameter of the coating material is, for example, 0.0001 to 0.05 $\mu$m. The particle diameter of the coating material can be measured by the same method as described in the method for measuring the average primary particle diameter described above.

The element M and the element X may be the same or different. From the viewpoint of efficient production, it is preferable that the element M and the element X are the same.

When the LiMO powder of the present embodiment has a coating material, the ratio (M / (Ni + X)) of the molar ratio of the element M contained in the coating material with respect to the sum of the molar ratios of Ni and the element X is preferably 0.05 mol% or more and 5 mol% or less.

The ratio (M / (Ni + X)) is more preferably 4 mol% or less, and particularly preferably 3 mol% or less. The ratio (M / (Ni + X)) is more preferably 0.1 mol% or more, and particularly preferably 1 mol% or more. The above upper limit values and lower limit values can be arbitrarily combined.

As an example of the combination, the ratio (M / Ni + X) is preferably 0.1 mol% or more and 4 mol% or less, and more preferably 1 mol% or more and 3 mol% or less.

In the present embodiment, the confirmation of the composition of the coating material can be carried out by analyzing the cross-section of the particles by STEM-EDX elemental line analysis, inductively coupled plasma atomic emission spectrophotometry, electron probe microanalysis and the like. The confirmation of the crystal structure of the coating material can be carried out by powder X-ray diffraction, electron beam diffraction.

The LiMO of the present embodiment is preferably represented by the following composition formula (I).

$$Li[Li_m(Ni_{(1-n)}X_n)_{1-m}]O_2 \qquad (I)$$

(wherein $-0.1 \leq m \leq 0.2$, $0 < n \leq 0.7$, and element X is one or more elements selected from the group consisting of Co, Mn, Fe, Cu, Ti, Mg, Al, W, Mo, Nb, Zn, Sn, Zr, Ga, V, B, Si, S and P.)

From the viewpoint of obtaining a lithium secondary battery having high cycle characteristics, m in the above composition formula (I) is preferably more than 0, more preferably 0.01 or more, and still more preferably 0.02 or more. Further, from the viewpoint of obtaining a lithium secondary battery having a higher initial coulombic efficiency, m in the above composition formula (I) is preferably 0.1 or less, more preferably 0.08 or less, and still more preferably 0.06 or less.

The upper limit values and lower limit values of m can be arbitrarily combined.

In the present embodiment, $0 < m \leq 0.2$ is preferable, and $0 < m \leq 0.1$ is more preferable.

From the viewpoint of obtaining a lithium secondary battery having a high discharge capacity, n in the above composition formula (I) is preferably 0.7 or less, more preferably 0.5 or less, still more preferably 0.45 or less, and particularly preferably 0.2 or less. Further, n is preferably more than 0, more preferably 0.05 or more, still more preferably 0.10 or more, and particularly preferably 0.12 or more.

The upper limit values and lower limit values of n can be arbitrarily combined.

Examples of the combination include more than 0 and 0.7 or less, 0.05 or more and 0.5 or less, 0.10 or more and 0.45 or less, and 0.12 or more and 0.2 or less.

In the present embodiment, the amount of nickel (Ni/(Ni+X)) with respect to the total amount of nickel and the element X, in terms of molar ratio, preferably 0.4 or more, more preferably 0.45 or more, still more preferably 0.50 or more, and particularly preferably 0.55 or more.

The upper limit value of (Ni/(Ni+X)) is not particularly limited, and examples thereof include 0.95, 0.92, and 0.90.

The upper limit values and lower limit values can be arbitrarily combined. Examples of the combination include 0.45 or more and 0.95 or less, 0.50 or more and 0.92 or less, and 0.55 or more and 0.90 or less.

The composition analysis of LiMO can be carried out by analyzing using an ICP emission spectrophotometer after the obtained LiMO powder is dissolved in hydrochloric acid.

(Layered structure)

In the present embodiment, the crystal structure of LiMO powder is a layered structure, and is more preferably a hexagonal crystal structure or a monoclinic crystal structure.

The hexagonal crystal structure belongs to any one of the space groups selected from the group consisting of P3, $P3_1$, $P3_2$, R3, P-3, R-3, P312, P321, $P3_1$12, $P3_1$21, P3212, $P3_2$21, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, P6322, P6mm, P6cc, P63cm, $P6_3$mc, P-6m2, P-6c2, P-62m, P-62c, P6/mmm, P6/mcc, $P6_3$/mcm and $P6_3$/mmc.

Further, the monoclinic crystal structure belongs to any one of space groups selected from the group consisting of P2, $P2_1$, C2, Pm, Pc, Cm, Cc, P2/m, $P2_1$/m, C2/m, P2/c, $P2_1$/c and C2/c.

Of these, in order to obtain a lithium secondary battery with a high discharge capacity, the crystal structure is particularly preferably a hexagonal crystal structure belonging to a space group of R-3m or a monoclinic crystal structure belonging to a space group of C2/m.

The crystal structure of LiMO powder can be confirmed by X-ray diffraction measurement of LiMO powder.

<<BET specific surface area>>

In the present embodiment, the BET specific surface area of the LiMO powder is preferably 0.1 $m^2$/g or more, more preferably 0.2 $m^2$/g or more, and still more preferably 0.3 $m^2$/g or more.

Further, the BET specific surface area of the LiMO powder is preferably 1.0 $m^2$/g or less, more preferably 0.95 $m^2$/g or less, and still more preferably 0.9 $m^2$/g or less.

The upper limit values and lower limit values can be arbitrarily combined.

Examples of the combination include 0.1 $m^2$/g or more and 1.0 $m^2$/g or less, 0.2 $m^2$/g or more and 0.95 $m^2$/g or less, and 0.3 $m^2$/g or more and 0.9 $m^2$/g or less.

In the present embodiment, the BET specific surface area of the LiMO powder can be measured by the following method.

The BET specific surface area (unit:$m^2$/g) is measured using a BET specific surface area measuring device after 1 g of the LiMO powder is dried at 105°C in a nitrogen atmosphere for 30 minutes.

As the BET specific surface area measuring device, for example, Macsorb (registered trademark) manufactured by MOUNTECH Co., Ltd. can be used.

<Method for producing LiMO powder>

A method for producing LiMO powder according to the present embodiment will be described.

The method for producing LiMO powder according to the present embodiment is preferably a production method including the following steps (1), (2), and (3) in this order.

(1) A step of producing a precursor of LiMO powder.
(2) A mixing step of mixing the aforementioned precursor and a lithium compound to obtain a mixture.
(3) A step of calcining the aforementioned mixture to obtain LiMO powder.

[Step of producing precursor of LiMO powder]

First, a precursor of LiMO powder is produced. The precursor is an MCC containing a metal other than lithium among the metals constituting the target LiMO. Specifically, the precursor is a nickel-containing MCC that contains nickel as an essential metal, and an element X as an optional element.

As the nickel-containing MCC serving as a precursor, a nickel-containing metal composite hydroxide or a nickel-containing metal composite oxide can be used.

The precursor can be produced by a commonly known coprecipitation method. As the coprecipitation method, a batch coprecipitation method or a continuous coprecipitation method can be used.

Hereinafter, a method for producing a precursor will be described in detail, using as an example a nickel cobalt manganese metal composite hydroxide (hereinafter, may be described as "metal composite hydroxide") containing nickel and, as the element X, cobalt and manganese.

First, using a coprecipitation method, particularly a continuous coprecipitation method described in JP-A-2002-201028, a nickel salt solution, a cobalt salt solution, a manganese salt solution and a complexing agent are allowed to react to produce a metal composite hydroxide represented by $Ni_sCo_tMn_u(OH)_2$ (in the formula, s + t + u = 1).

Although there is no particular limitation with respect to a nickel salt as a solute in the above nickel salt solution, for example, any one or more of nickel sulfate, nickel nitrate, nickel chloride and nickel acetate can be used.

As a cobalt salt as a solute in the above cobalt salt solution, for example, any one or more of cobalt sulfate, cobalt nitrate, cobalt chloride and cobalt acetate can be used.

As a manganese salt as a solute in the above manganese salt solution, for example, any one or more of manganese sulfate, manganese nitrate, manganese chloride and manganese acetate can be used.

The above metal salts are used in a ratio corresponding to the composition ratio of the above $Ni_sCo_tMn_u(OH)_2$. That is, the amount of each metal salt is specified so that the molar ratios of nickel in the solute of the nickel salt solution, cobalt in the solute of the cobalt salt solution and manganese in the solute of the manganese salt solution correspond to s: t: u of $Ni_sCo_tMn_u(OH)_2$.

Further, the solvent for the nickel salt solution, cobalt salt solution and manganese salt solution is water. That is, the nickel salt solution, cobalt salt solution and manganese salt solution are aqueous solutions.

The complexing agent is a compound capable of forming a complex with nickel ions, cobalt ions and manganese ions in an aqueous solution.

Examples of the complexing agent include an ammonium ion donor (such as ammonium sulfate, ammonium chloride, ammonium carbonate and ammonium fluoride), hydrazine, ethylenediaminetetraacetic acid, nitrilotriacetic acid, uracildiacetic acid and glycine.

A complexing agent may or may not be used in the step for producing a precursor.

When a complexing agent is used, the amount of the complexing agent contained in a mixture solution containing the nickel salt solution, the salt solution of the element X and the complexing agent is preferably, for example, more than 0 and equal to or less than 2.0 in terms of a molar ratio with respect to the total number of moles of the nickel salt and the salt of the element X.

In the present embodiment, the amount of the complexing agent contained in a mixture solution containing the nickel salt solution, the cobalt salt solution, the manganese salt solution and the complexing agent is preferably, for example, more than 0 and equal to or less than 2.0 in terms of a molar ratio with respect to the total number of moles of metal salts.

In the coprecipitation method, in order to adjust the pH value of the mixture solution containing the nickel salt solution, the salt solution of the element X and the complexing agent, an alkali metal hydroxide is added to the mixture solution before the pH of the mixture solution changes from alkaline to neutral. The alkali metal hydroxide may be, for example, sodium hydroxide or potassium hydroxide.

It should be noted that the pH value in the present specification is defined as a value measured when the temperature of the mixture solution is 40°C. The pH of the mixture solution is measured when the temperature of the mixture solution sampled from the reaction vessel reaches 40°C.

When the complexing agent is successively supplied to the reaction vessel in addition to the above nickel salt solution, cobalt salt solution and manganese salt solution, nickel, cobalt, and manganese react with each other to generate $Ni_sCo_tMn_u(OH)_2$.

During the reaction, the temperature of the reaction vessel is controlled within a range of, for example, 20°C or higher and 80°C or lower, and preferably 30°C or higher and 70°C or lower.

The pH value in the reaction vessel is set within a range of, for example, pH 9 or more and pH 13 or less, and preferably pH 10 or more and pH 12.5 or less, when the temperature of the aqueous solution is 40°C. The pH value is controlled with in ± 0.5.

The materials in the reaction vessel are appropriately stirred. As the reaction vessel using in a continuous coprecipitation, a type of reaction vessel that overflows can be used to separate the precipitated reaction product.

By controlling the temperature and pH value in the reaction vessel to be constant within the above range, the sphericity of the particles can be adjusted, and the requirement (1) can be controlled within the range of the present embodiment. Specifically, by advancing a uniform reaction within a specific condition range, extremely fine particles and large particles are less likely to generate, and it is possible to control the sphericity that changes due to collisions between particles within a desired range.

In the present embodiment, it is preferably to adjust the concentrations of the nickel salt solution, the salt solution of the element X, and the alkaline solution, and the concentration of the complexing agent so that the volume of the raw material mixture solution of the nickel salt solution and the salt solution of the element X supplied to the reaction vessel is larger than the sum of the volume of the complexing agent alkaline solution including the alkaline solution containing the alkali metal hydroxide and the complexing agent.

As a result, it is possible to obtain a metal composite hydroxide whose requirement (1) can be easily controlled within the range of the present embodiment.

The ratio of the volume of the raw material mixture solution with respect to the sum of the volume of the complexing agent alkaline solution is preferably 1.05 to 20, more preferably 1.1 to 15, and still more preferably 1.2 to 10.

The inside the reaction vessel may have an inert atmosphere. When an inert atmosphere is maintained inside the reaction vessel, it is possible to prevent the metals contained in the mixture solution that are more susceptible to oxidation than nickel from aggregating before nickel. Therefore, a uniform metal composite hydroxide can be obtained.

Further, the inside of the reaction vessel may have an appropriate oxidizing atmosphere. The oxidizing atmosphere may be an oxygen-containing atmosphere in which an oxidizing gas is mixed with an inert gas, or an atmosphere in which the oxidizing agent is present under the inert gas atmosphere. When the inside of the reaction vessel has an appropriate oxidizing atmosphere, the transition metal contained in the mixture solution is appropriately oxidized, and the morphology of the metal composite oxide can be easily controlled.

The oxygen or oxidant in the oxidizing atmosphere may have sufficient oxygen atoms to oxidize the transition metal.

When the oxidizing atmosphere is an oxygen-containing atmosphere, the atmosphere in the reaction vessel can be controlled by aeration of the oxidizing gas in the reaction vessel, bubbling the oxidizing gas in the mixture solution, or the like.

After the reaction as described above, a precursor is isolated from the obtained reaction precipitate, washed, and then dried to obtain the nickel cobalt manganese metal composite hydroxide as the precursor.

Further, in a case where impurities derived from the mixture solution remain by simply washing the reaction precipitate with water, if necessary, the reaction precipitate may be washed with a weak acid water or an alkaline solution. Examples of the alkaline solution include an aqueous solution containing sodium hydroxide and potassium hydroxide.

As a method for isolating the precursor from the reaction precipitate, a method of dehydrating the slurry containing the reaction precipitate (co-precipitate slurry) by centrifugation, suction filtration or the like is preferably used.

The drying time is preferably 1 hour or more and 30 hours or less in total from the start of temperature increase to the end of temperature maintenance. The rate of temperature increase in the heating step to reach the maximum holding temperature is preferably 180°C/hour or more, more preferably 200°C/hour or more, and particularly preferably 250°C/hour or more.

The maximum holding temperature in the present specification is the maximum temperature among holding temperatures of the atmosphere in the drying furnace and the calcination furnace in the drying step or the calcination step described later (hereinafter, also collectively referred to as "heating step"), and means the temperature in the heating step. In the case of a calcination step having a plurality of heating steps, the maximum holding temperature means the maximum temperature in each heating step, respectively.

The heating rate in the present specification is calculated from the time from the start of temperature rise to the time when the maximum holding temperature is reached, and the temperature difference from the temperature at the start of temperature rise to the maximum holding temperature in the heating device.

The drying conditions are not particularly limited, and examples thereof include any of the following drying conditions 1) to 3).

1) A condition in which the precursor is not oxidized or reduced.

More specifically, it is a drying condition in which an oxide is maintained as an oxide, or a drying condition in which a hydroxide is maintained as a hydroxide.

2) A condition in which the precursor is oxidized.

More specifically, it is a drying condition for oxidation from a hydroxide to an oxide.

3) A condition in which the precursor is reduced.

More specifically, it is a drying condition for reduction from an oxide to a hydroxide.
The drying conditions 1) to 3) may be appropriately selected depending on whether the nickel-containing MCC to be produced is either a nickel-containing metal composite hydroxide or a nickel-containing metal composite oxide.
For a condition in which the precursor is not oxidized or reduced, an inert gas such as nitrogen, helium and argon may be used in the drying atmosphere. For a condition in which the hydroxide is oxidized, oxygen or air may be used in the drying atmosphere.
Further, for a condition in which the precursor is reduced, a reducing agent such as hydrazine or sodium sulfite may be used under an inert gas atmosphere.
After drying the precursor, classification may be performed as appropriate.
In the above example, a nickel cobalt manganese metal composite hydroxide is produced; however, a nickel cobalt manganese metal composite oxide may be produced instead. When preparing the nickel cobalt manganese metal composite oxide, a method of heat-treating the nickel cobalt manganese metal composite hydroxide can be mentioned.

- Precursor crushing step

In the present embodiment, a step of crushing the produced precursor is included. The crushing step is preferably carried out using a rotary millstone, an air flow type mill, a collision type mill with a classification mechanism, a pin mill, a jet mill, a counter jet mill with a classification rotor, or the like.
In the crushing of the precursor in this step, it is carried out in order to eliminate the excessive aggregation of the precursor.
For this reason, it is preferable to carry out the crushing step with a crushing strength that does not destroy the shapes of the secondary particles and the primary particles of the precursor.

[(2) Mixing step]

This step is a step for mixing a lithium compound and a precursor to obtain a mixture.

- Lithium compound

As the lithium compound used in the present embodiment, a mixture of any one of lithium carbonate, lithium nitrate, lithium acetate, lithium hydroxide, lithium oxide, lithium chloride and lithium fluoride, or mixture thereof can be used. Among these, either one or both of lithium hydroxide and lithium carbonate is preferable.
Further, when lithium hydroxide contains lithium carbonate as an impurity, the content of lithium carbonate in lithium hydroxide is preferably 5% by mass or less.
A method of mixing the precursor and the lithium compound will be described.
The precursor obtained by the above method is mixed with the lithium compound.
The aforementioned lithium compound and the precursor are mixed in respective amounts determined in view of the composition ratio of the end product.
For example, when using a nickel cobalt manganese composite hydroxide, the lithium compound and the nickel cobalt manganese composite hydroxide are mixed in a ratio corresponding to the composition ratio of $Li[Li_r(Ni_sCo_t Mn_u)_{1-r}]O_2$ (wherein, $s + t + u = 1$).
By calcining a mixture of the nickel cobalt manganese composite hydroxide and the lithium compound in subsequent calcination step, a lithium-nickel cobalt manganese composite oxide can be obtained.
From the viewpoint of obtaining a uniform lithium-nickel cobalt manganese composite oxide, r is preferably more than 0, more preferably 0.01 or more, and still more preferably 0.02 or more. From the viewpoint of obtaining a lithium-nickel cobalt manganese composite oxide with high purity, r is preferably 0.1 or less, more preferably 0.08 or less, and still more preferably 0.06 or less.

The upper limit values and lower limit values of r can be arbitrarily combined.

As an example of the combination, r is preferably more than 0 and 0.1 or less, more preferably 0.01 or more and 0.08 or less, and still more preferably 0.02 or more and 0.06 or less.

[Step of calcining the mixture to obtain LiMO powder]

In this embodiment, the mixture of the lithium compound and the precursor is calcined.

In the present embodiment, the mixture of the lithium compound and the precursor may be calcined in the presence of an inert melting agent.

In the present embodiment, the calcination temperature may be in the range of 200°C or higher and 1150°C or lower, and the calcination temperature is preferably 300°C or higher and 1050°C or lower, and more preferably 500°C or higher and 1000°C or lower.

By adjusting the holding time in calcination, the obtained LiMO powder can be controlled within the range of the requirement (1) and the requirement (2).

The longer the holding time, the larger the primary particle size, and it tends to be controllable within the range of requirement (2).

The holding time in calcination may be appropriately adjusted depending on the type of transition metal element to be used, and the types and amounts of precipitant and inert melting agent.

When the calcination temperature is not less than the above lower limit value, the LiMO powder having a strong crystal structure can be obtained. Further, when the calcination temperature is not more than the above upper limit value, the volatilization of lithium on the surface of the primary particles or the surface of the secondary particles can be reduced.

Specifically, the time for holding at the calcination temperature may be 0.1 hour or more and 20 hours or less, is preferably 0.5 hours or more and 10 hours or less.

The rate of temperature rise to the calcination temperature is usually 50°C/hour or more and 400°C/hour or less.

The temperature lowering rate from the calcination temperature to room temperature is usually 10°C/hour or more and 400°C/hour or less.

Further, as the atmosphere for calcination, air, oxygen, nitrogen, argon or a mixed gas thereof can be used.

In the present embodiment, the heating rate of the heating step to reach the maximum holding temperature is preferably 180°C/hour or more, more preferably 200°C/hour or more, and particularly preferably 250°C/hour or more.

When the inert melting agent remains in the LiMO powder after calcination, pure water or an alkaline washing liquid can be used for washing.

- Crushing step

After calcination, the obtained LiMO powder may be crushed. When the LiMO powder obtained by calcination does not satisfy the requirement (1), it is preferable to adjust the LiMO powder so as to satisfy the requirement (1) by a crushing step.

The crushing step is preferably carried out using an air flow type mill, a collision type mill with a classification mechanism, a pin mill, a ball mill, a jet mill, a counter jet mill with a classification rotor, or the like.

- Method for producing LiMO powder having a coating material

The case of producing LiMO powder having a coating material will be described.

First, the coating raw material and the LiMO powder are mixed. Next, by heat-treating as necessary, the coating material composed of the coating raw material can be formed on the surface of the primary particles or secondary particles of the LiMO powder.

The coating raw material is not particularly limited, and oxides, hydroxides, carbonates, nitrates, sulfates, halides, oxalates or alkoxides can be used, and oxides are preferable.

The mixing of the coating raw material and the LiMO powder may be carried out in the same manner as in the mixing at the time of producing the LiMO powder.

A method of mixing using a mixing device that does not have a mixing medium such as a ball and does not involve strong crushing, such as a method of mixing using a powder mixer having a stirring blade inside, is preferable.

Further, the coating material can be more firmly attached to the surface of the LiMO powder by holding it in an atmosphere containing water after mixing.

The heat treatment conditions (temperature, holding time) in the heat treatment performed as necessary after mixing the coating raw material and the LiMO powder may differ depending on the type of the coting raw material.

The heat treatment temperature is preferably set in the range of 200°C or higher and 850°C or lower, and is preferably a temperature equal to or lower than the calcination temperature of the LiMO powder. In a case where the heat treatment temperature is higher than the calcination temperature of the LiMO powder, the coating raw material may be solid-solved with the LiMO powder and the coating material may not be formed. As the atmosphere in the heat treatment, the same atmospheric gas as in the calcination can be mentioned.

By using methods such as sputtering, CVD, and vapor deposition, a coating material can be formed on the surface of the LiMO powder to obtain the LiMO powder having a coating layer or coating particles.

Further, the LiMO powder having a coating material may be obtained by mixing the precursor, the lithium compound and the coating raw material, and calcining the obtained mixture.

The LiMO powder having a coating material on the surface of the primary particles or the secondary particles of the LiMO powder is appropriately crushed and classified into LiMO powder.

<CAM>

The CAM of the present embodiment includes the LiMO powder of the present embodiment. The content ratio of the LiMO powder with respect to the total mass (100% by mass) of the CAM is preferably 70% by mass or more and 99% by mass or less, and more preferably 80% by mass or more and 98% by mass or less.

<Lithium secondary battery>

Next, a configuration of a suitable lithium secondary battery when the LiMO of the present embodiment is used as a CAM will be described.

Further, a suitable positive electrode for a lithium secondary battery (hereinafter, may be referred to as a positive electrode) when the LiMO of the present embodiment is used as a CAM will be described.

Furthermore, a lithium secondary battery as a suitable use of a positive electrode will be described.

In an example, a suitable lithium secondary battery when the LiMO of the present embodiment is used as a CAM includes a positive electrode and a negative electrode, a separator sandwiched between the positive electrode and the negative electrode, and an electrolytic solution disposed between the positive electrode and the negative electrode.

In an example, the lithium secondary battery includes a positive electrode and a negative electrode, a separator sandwiched between the positive electrode and the negative electrode, and an electrolytic solution disposed between the positive electrode and the negative electrode.

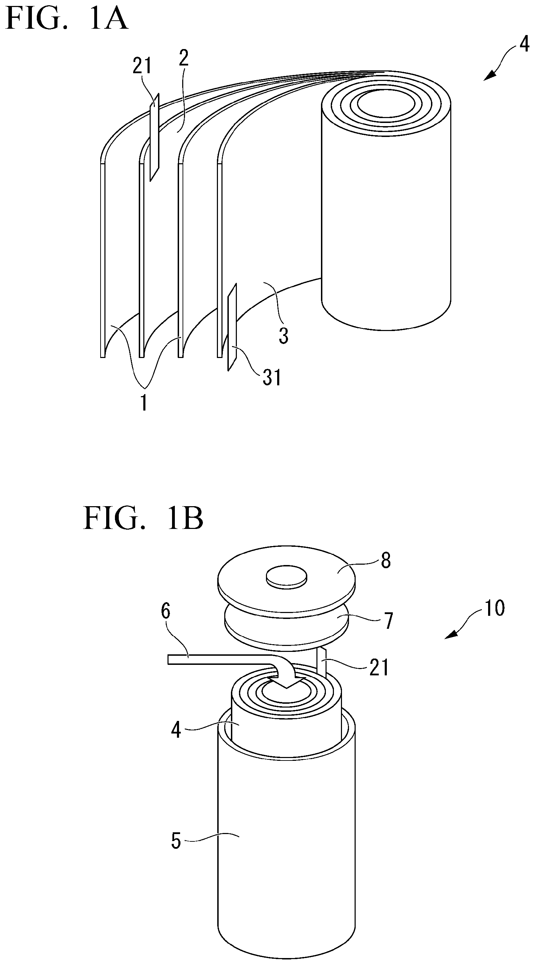

Each of FIG. 1A and FIG. 1B is a schematic view showing an example of a lithium secondary battery. A cylindrical lithium secondary battery 10 of the present embodiment is produced as follows.

First, as shown in FIG. 1A, a pair of separators 1 having a strip shape, a strip-shaped positive electrode 2 having a positive electrode lead 21 at one end, and a strip-shaped negative electrode 3 having an negative electrode lead 31 at one end are laminated in an order of the separator 1, the positive electrode 2, the separator 1, and the negative electrode 3, and are wound into an electrode group 4.

Next, as shown in FIG. 1B, after accommodating the electrode group 4 and an insulator (not shown) in a battery can 5, the bottom of the can is sealed, and then the electrode group 4 is impregnated with an electrolytic solution 6 such that an electrolyte is disposed between the positive electrode 2 and the negative electrode 3. Furthermore, by sealing an upper portion of the battery can 5 with a top insulator 7 and a sealing body 8, the lithium secondary battery 10 can be produced.

Examples of the shape of the electrode group 4 include a columnar shape so that the cross-sectional shape when the electrode group 4 is cut in the direction perpendicular to the winding axis is a circle, an ellipse, a rectangle, or a rectangle with rounded corners.

Further, as the shape of the lithium secondary battery having such an electrode group 4, the shape prescribed by IEC60086, which is a standard for batteries prescribed by the International Electrotechnical Commission (IEC), or by JIS C8500 can be adopted. Examples thereof include a cylindrical shape, an angular shape and the like.

Furthermore, the lithium secondary battery is not limited to the winding type configuration as described above, and may have a laminated type configuration in which a laminated structure of a positive electrode, a separator, a negative electrode and a separator is repeatedly overlaid. Examples of the laminated lithium secondary battery include the so-called coin-type batteries, button-type batteries and paper-type (or sheet-type) batteries.

Hereinafter, each configuration will be described in order.

(Positive electrode)

The positive electrode can be produced by first preparing a positive electrode mix containing a CAM, a conductive material and a binder, and then causing the positive electrode mix to be supported on a positive electrode current collector.

(Conductive material)

A carbon material can be used as the conductive material included in the positive electrode. Examples of the carbon material include a graphite powder, carbon black (for example, acetylene black), and a fibrous carbon material. Since carbon black is fine particles and has a large surface area, the addition of a small amount of carbon black to the positive electrode mix enhances the conductivity inside the positive electrode and improves the charge and discharge efficiency and output characteristics. However, when the carbon black is added too much, both the binding strength between the positive electrode mix and the positive electrode current collector and the binding strength inside the positive electrode mix by the binder decrease, which conversely causes an increase in internal resistance.

The ratio of the conductive material in the positive electrode mix is preferably 5 parts by mass or more and 20 parts by mass or less with respect to 100 parts by mass of CAM. In the case of using a fibrous carbon material such as a graphitized carbon fiber or a carbon nanotube as the conductive material, it is also possible to decrease this ratio.

(Binder)

A thermoplastic resin can be used as the binder included in the positive electrode of the present embodiment. Examples of the thermoplastic resin include polyimide resins; fluororesins such as polyvinylidene fluoride (hereinafter, may be referred to as PVdF) and polytetrafluoroethylene; polyolefin resins such as polyethylene and polypropylene, and resins described in WO2019 / 098384A1 or US2020 / 0274158A1.

Two or more of these thermoplastic resins may be used in the form of a mixture thereof. When a fluororesin and a polyolefin resin are used as binders, the ratio of the fluororesin with respect to the entire positive electrode mix is set to 1% by mass or more and 10% by mass or less and the ratio of the polyolefin resin with respect to the entire positive electrode mix is set to 0.1% by mass or more and 2% by mass, it is possible to obtain a positive electrode mix having both a high adhesive force relative to the positive electrode current collector and a high bonding force inside the positive electrode mix.

(Positive electrode current collector)

As the positive electrode current collector included in the positive electrode, it is possible to use a strip-shaped member composed of a metal material such as Al, Ni, or stainless steel as a forming material. It is particularly preferred to use a current collector which is formed of Al and is shaped into a thin film because of its high processability and low cost.

Examples of the method for causing the positive electrode mix to be supported on the positive electrode current collector include a method in which the positive electrode mix is pressure molded on the positive electrode current collector. Alternatively, the positive electrode mix may be caused to be supported on the positive electrode current collector by producing a paste from the positive electrode mix using an organic solvent, and applying the obtained paste of the positive electrode mix to at least one surface side of the positive electrode current collector, followed by drying and pressing the resultant for fixation.

Examples of the organic solvent that can be used in the case of producing the paste from the positive electrode mix include an amine-based solvent such as N,N-dimethylaminopropylamine and diethylenetriamine; an ether-based solvent such as tetrahydrofuran; a ketone-based solvent such as methyl ethyl ketone; an ester-based solvent such as methyl acetate; and an amide-based solvent such as dimethylacetamide and N-methyl-2-pyrrolidone (hereinafter, referred to as NMP in some cases).

Examples of the method for applying the paste of the positive electrode mix to the positive electrode current collector include a slit die coating method, a screen coating method, a curtain coating method, a knife coating method, a gravure coating method and an electrostatic spray method.

The positive electrode can be produced by the method as described above.

(Negative electrode)

The negative electrode included in the lithium secondary battery is not particularly limited as long as it is capable of doping and de-doping lithium ions at a potential lower than that of the positive electrode, and examples thereof include an electrode in which a negative electrode mix containing a negative electrode active material is supported on a negative electrode current collector, and an electrode composed solely of a negative electrode active material.

(Negative electrode active material)

Examples of the negative electrode active material included in the negative electrode include materials which are carbon materials, chalcogen compounds (oxides, sulfides or the like), nitrides, metals or alloys, and allow lithium ions to be doped or dedoped at a potential lower than that of the positive electrode.

Examples of the carbon material that can be used as the negative electrode active material include graphite such as natural graphite or artificial graphite, cokes, carbon black, pyrolytic carbons, carbon fibers, and calcined products of organic polymer compounds.

Examples of the oxide that can be used as the negative electrode active material include oxides of silicon represented by a formula: $SiO_x$ (here, x is a positive real number) such as $SiO_2$ and SiO; oxides of tin represented by a formula: $SnO_x$ (here, x is a positive real number) such as $SnO_2$ and SnO; and composite metal oxides containing lithium and titanium such as $Li_4Ti_5O_{12}$.

Further, examples of the metal that can be used as the negative electrode active material include lithium metal, silicon metal, tin metal, and the like.

As a material that can be used as the negative electrode active material, materials described in WO2019 / 098384A1 orUS2020 / 0274158A1 may be used.

These metals and alloys are mainly used alone as an electrode after being processed into, for example, a foil.

Among the above negative electrode active materials, carbon materials containing graphite such as natural graphite and artificial graphite as a main component are preferably used for reasons that: the potential of the negative electrode hardly changes during charging from an uncharged state to a fully charged state (the potential flatness is favorable); the average discharge potential is low; the capacity retention rate at the time of repeated charge and discharge is high (the cycle characteristics are favorable); and the like. The shape of the carbon material may be, for example, any of a flake shape as in the case of natural graphite, a spherical shape as in the case of mesocarbon microbeads, a fibrous shape as in the case of a graphitized carbon fiber, or an aggregate of fine powder.

The above negative electrode mix may contain a binder, if necessary. As the binder, a thermoplastic resin can be used, and specific examples thereof include PVdF, thermoplastic polyimides, carboxymethyl cellulose (hereinafter, may be referred to as CMC), styrene-butadiene rubbers (hereinafter, may be referred to as SBR), polyethylene and polypropylene.

(Negative electrode current collector)

Examples of the negative electrode current collector included in the negative electrode include a strip-shaped member composed of a metal material such as Cu, Ni and stainless steel as a forming material. In particular, a negative electrode current collector that uses Cu as a forming material and processed into a thin film shape is preferable since Cu is unlikely to form an alloy with lithium and can be easily processed.

Examples of the method for causing the negative electrode mix to be supported on such a negative electrode current collector include, as in the case of the positive electrode, a method by pressure molding, and a method in which a paste of the negative electrode mix obtained by using a solvent or the like is applied to and dried on the negative electrode current collector, followed by pressure bonding.

(Separator)

As the separator included in the lithium secondary battery, it is possible to use, for example, a material that is composed of a material such as a polyolefin resin (such as polyethylene and polypropylene), a fluororesin or a nitrogen-containing aromatic polymer and has a form of a porous film, a nonwoven fabric, a woven fabric or the like. Further, the separator may be formed by using two or more of these materials or the separator may be formed by laminating these materials. Moreover, separators described in JP-A-2000-030686 and US20090111025A1 may be used.

In the present embodiment, for satisfactory permeation of the electrolyte during the use (at the time of charging and discharging) of the battery, the separator preferably has an air resistance of 50 sec/100 cc or more and 300 sec/100 cc or less, and more preferably 50 sec/100 cc or more and 200 sec/100 cc or less, as measured by the Gurley method prescribed in JIS P 8117.

Further, the porosity of the separator is preferably 30% by volume or more and 80% by volume or less, and more preferably 40% by volume or more and 70% by volume or less with respect to the total volume of the separator. The separator may be a laminate of separators having different porosities.

(Electrolytic solution)

The electrolytic solution included in the lithium secondary battery contains an electrolyte and an organic solvent.

Examples of the electrolyte contained in the electrolytic solution include lithium salts such as $LiClO_4$ and $LiPF_6$, and a mixture of two or more of these salts may be used. Further, electrolytes described in WO2019 / 098384A1 or US2020 / 0274158A1 may be used. Among these, as the electrolyte, it is preferable to use at least one fluorine-containing salt selected from the group consisting of $LiPF_6$, $LiAsF_6$, $LiSbF_6$, $LiBF_4$, $LiCF_3SO_3$, $LiN(SO_2CF_3)_2$ and $LiC(SO_2CF_3)_3$.

Further, as the organic solvent contained in the above electrolytic solution, for example, propylene carbonate, ethylene carbonate, dimethyl carbonate, diethyl carbonate, ethyl methyl carbonate, and organic solvents described in WO2019 / 098384A1 or US2020 / 0274158A1 can be used.

As the organic solvent, it is preferable to use a mixture of two or more of these organic solvents. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has a number of features as follows: the electrolytic solution has a broad operating temperature range, does not easily deteriorate even when charged and discharged at a high current rate, does not easily deteriorate even when used for a long period of time, and does not easily decompose even in a case where a graphite material such as natural graphite or artificial graphite is used as an active material for the negative electrode.

Further, as the electrolytic solution, it is preferable to use an electrolytic solution containing a lithium salt containing fluorine such as $LiPF_6$ and an organic solvent having a fluorine substituent because the safety of the obtained lithium secondary battery is enhanced. A mixed solvent containing an ether having a fluorine substituent such as pentafluoropropyl methyl ether and 2,2,3,3-tetrafluoropropyl difluoromethyl ether and dimethyl carbonate is still more preferable since the capacity retention rate is high even when charged and discharged at a high current rate.

<All-solid-state lithium secondary battery>

Next, a positive electrode using LiMO according to one aspect of the present invention as a CAM of an all-solid-state lithium secondary battery, and an all-solid-state lithium secondary battery having this positive electrode will be described while explaining the configuration of the all-solid-state lithium secondary battery.

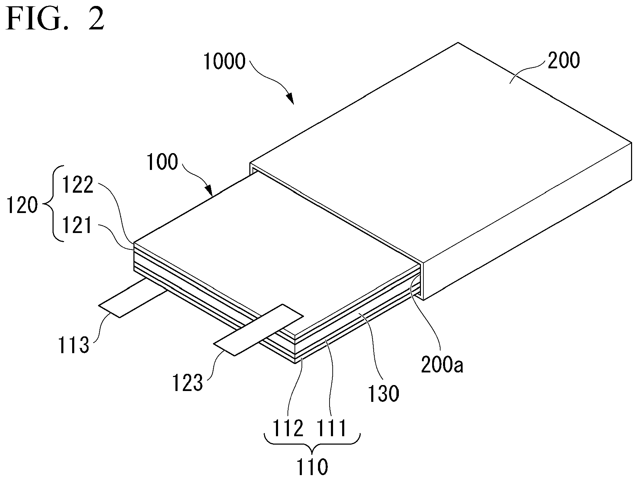

FIG. 2 is a schematic diagram showing an example of an all-solid-state lithium secondary battery of the present embodiment. An all-solid-state secondary battery 1,000 shown in FIG. 2 includes a laminate 100 having a positive electrode 110, a negative electrode 120 and a solid electrolyte layer 130, and an exterior body 200 accommodating the laminate 100. Further, the all-solid-state lithium secondary battery 1,000 may have a bipolar structure in which a CAM and a negative electrode active material are arranged on both sides of a current collector. Specific examples of the bipolar structure include structures described in JP-A-2004-95400. A material constituting each member will be described later.

The laminate 100 may have an external terminal 113 connected to a positive electrode current collector 112 and an external terminal 123 connected to a negative electrode current collector 122. In addition, the all-solid-state lithium secondary battery 1,000 may have a separator between the positive electrode 110 and the negative electrode 120.

The all-solid-state lithium secondary battery 1,000 further has an insulator (not shown) that insulates the laminate 100 and the exterior body 200 from each other, and a sealant (not shown) that seals an opening 200a of the exterior body 200.

As the exterior body 200, a container obtained by molding a metal material having high corrosion resistance such as aluminum, stainless steel or nickel-plated steel can be used. In addition, as the exterior body 200, a container obtained by processing a laminate film having at least one surface subjected to a corrosion resistant treatment into a bag shape can also be used.

Examples of the shape of the all-solid-state lithium secondary battery 1,000 include shapes such as a coin type, a button type, a paper type (or a sheet type), a cylindrical type, a square type, and a laminate type (pouch type).

Although a form of the all-solid-state lithium secondary battery 1,000 having one laminate 100 is illustrated as an example, the present embodiment is not limited thereto. The all-solid-state lithium secondary battery 1,000 may have a configuration in which the laminate 100 serves as a unit cell and a plurality of unit cells (laminates 100) are sealed inside the exterior body 200.

Hereinafter, each configuration will be described in order.

(Positive electrode)

The positive electrode 110 of the present embodiment has a positive electrode active material layer 111 and a positive electrode current collector 112.

The positive electrode active material layer 111 contains the CAM according to one aspect of the present invention described above, and a solid electrolyte. Further, the positive electrode active material layer 111 may contain a conductive material and a binder.

(Solid electrolyte)

As the solid electrolyte contained in the positive electrode active material layer 111 of the present embodiment, a solid electrolyte that is lithium ion-conductive and used in a known all-solid lithium secondary battery can be adopted. Examples of such a solid electrolyte include an inorganic electrolyte and an organic electrolyte. Examples of the inorganic electrolyte include an oxide-based solid electrolyte, a sulfide-based solid electrolyte, and a hydride-based solid electrolyte. Examples of the organic electrolyte include polymer-based solid electrolytes. Examples of each electrolyte include compounds described in WO2020 / 208872A1, US2016 / 0233510A1, US2012 / 0251871A1 and US2018 / 0159169A1, and examples thereof include the following compounds.

(Oxide-based solid electrolyte)

Examples of the oxide-based solid electrolyte include perovskite-type oxides, NASICON-type oxides, LISICON-type oxides and garnet-type oxides. Specific examples of each oxide include compounds described in WO2020 / 208872A1, US2016 / 0233510A1 and US2020 / 0259213A1.

Examples of the garnet-type oxide include Li-La-Zr-based oxides such as $Li_7La_3Zr_2O_{12}$ (also referred to as LLZ).

The oxide-based solid electrolyte may be a crystalline material or an amorphous material.

(Sulfide-based solid electrolyte)

Examples of the sulfide-based solid electrolyte include $Li_2S$-$P_2S_5$-based compounds, $Li_2S$-$SiS_2$-based compounds, $Li2S$-$GeS2$-based compounds, $Li_2S$-$B_2S_3$-based compounds, $LiI$-$Si_2S$-$P_2S_5$-based compounds, $LiI$-$Li_2S$-$P_2O_5$-based compounds, $LiI$-$Li_3PO_4$-$P_2S_5$-based compounds and $Li_{10}GeP_2S_{12}$.

It should be noted that in the present specification, the expression "-based compound" which refers to a sulfide-based solid electrolyte is used as a general term for solid electrolytes mainly containing a raw material described before the expression "-based compound" such as "$Li_2S$" and "$P_2S_5$". For example, the $Li_2S$-$P_2S_5$-based compounds include solid electrolytes mainly containing $Li_2S$ and $P_2S_5$ and further containing other raw materials. The ratio of $Li_2S$ contained in the $Li_2S$-$P_2S_5$-based compound is, for example, 50 to 90% by mass with respect to the entire $Li_2S$-$P_2S_5$-based compound. The ratio of $P_2S_5$ contained in the $Li_2S$-$P_2S_5$-based compound is, for example, 10 to 50% by mass with respect to the entire $Li_2S$-$P_2S_5$-based compound. Further, the ratio of other raw materials contained in the $Li_2S$-$P_2S_5$-based compound is, for example, 0 to 30% by mass with respect to the entire $Li_2S$-$P_2S_5$-based compound. Moreover, the $Li_2S$-$P_2S_5$-based compounds also include solid electrolytes containing $Li_2S$ and $P_2S_5$ in different mixing ratios.

Examples of the $Li_2S$-$P_2S_5$-based compound include $Li_2S$-$P_2S_5$, $Li_2S$-$P_2S_5$-$LiI$, $Li_2S$-$P_2S_5$-$LiCl$, $Li_2S$-$P_2S_5$-$LiBr$ and $Li_2S$-$P_2S_5$-$LiI$-$LiBr$.

Examples of the $Li_2S$-$SiS_2$-based compound include $Li_2S$-$SiS_2$, $Li_2S$-$SiS_2$-$LiI$, $Li_2S$-$SiS_2$-$LiBr$, $Li_2S$-$SiS_2$-$LiCl$, $Li_2S$-$SiS_2$-$B_2S_3$-$LiI$, $Li_2S$-$SiS_2$-$P_2S_5$-$LiI$ and $Li_2S$-$SiS_2$-$P_2S_5$-$LiCl$.

Examples of the $Li_2S$-$GeS_2$-based compound include $Li_2S$-$GeS_2$ and $Li_2S$-$GeS_2$-$P_2S_5$.

The sulfide-based solid electrolyte may be a crystalline material or an amorphous material.

Two or more types of solid electrolytes can be used in combination as long as the effects of the invention are not impaired.

(Conductive material and binder)

As a conductive material included in the positive electrode active material layer 111 of the present embodiment, a material described in the above-mentioned section entitled (conductive material) can be used. Further, as for the ratio of the conductive material in the positive electrode mix, the ratio described in the above-mentioned section entitled (conductive material) can be applied in a similar manner. Moreover, as a binder included in the positive electrode, a material described in the above-mentioned section entitled (binder) can be used.

(Positive electrode current collector)

As the positive electrode current collector 112 included in the positive electrode 110 of the present embodiment, a material described in the above-mentioned section entitled (positive electrode current collector) can be used.

Examples of the method for causing the positive electrode active material layer 111 to be supported on the positive electrode current collector 112 include a method in which the positive electrode active material layer 111 is pressure molded on the positive electrode current collector 112. A cold press or a hot press can be used for pressure molding.

Further, the positive electrode active material layer 111 may be caused to be supported on the positive electrode current collector 112 by producing a positive electrode mix from a paste of a mixture of CAM, a solid electrolyte, a conductive material and a binder using an organic solvent, and applying the obtained positive electrode mix on at least one surface of the positive electrode current collector 112, followed by drying and pressing the resultant for fixation.

Alternatively, the positive electrode active material layer 111 may be caused to be supported on the positive electrode current collector 112 by producing a positive electrode mix from a paste of a mixture of CAM, a solid electrolyte and a conductive material using an organic solvent, and applying the obtained positive electrode mix on at least one surface of the positive electrode current collector 112, followed by drying and sintering.

As the organic solvent that can be used for the positive electrode mix, the same organic solvent that can be used when the positive electrode mix described above in the section entitled (positive electrode current collector) is formed into a paste can be used.

Examples of the method for applying the positive electrode mix on the positive electrode current collector 112 include the method described in the above-mentioned section entitled (positive electrode current collector).

The positive electrode 110 can be produced by the method as described above.

(Negative electrode)

The negative electrode 120 has a negative electrode active material layer 121 and a negative electrode current collector 122. The negative electrode active material layer 121 contains a negative electrode active material. Further, the negative electrode active material layer 121 may contain a solid electrolyte and a conductive material. As the negative electrode active material, the negative electrode current collector, the solid electrolyte, the conductive material and the binder, those described above can be used.

Examples of the method for causing the negative electrode active material layer 121 to be supported on the negative electrode current collector 122 include, as in the case of the positive electrode 110, a method by pressure molding, a method in which a negative electrode mix in the form of a paste containing a negative electrode active material is applied to and dried on the negative electrode current collector 122, followed by pressure bonding, and a method in which a negative electrode mix in the form of a paste containing a negative electrode active material is applied to and dried on the negative electrode current collector 122, followed by sintering.

(Solid electrolyte layer)

A solid electrolyte layer 130 includes the above-mentioned solid electrolyte.

The solid electrolyte layer 130 can be formed by depositing a solid electrolyte of an inorganic substance on the surface of the positive electrode active material layer 111 included in the above-mentioned positive electrode 110 by a sputtering method.

Further, the solid electrolyte layer 130 can be formed by applying and drying a paste-like mix containing a solid electrolyte on the surface of the positive electrode active material layer 111 included in the above-mentioned positive electrode 110. After drying, the solid electrolyte layer 130 may be formed by press molding and further pressurizing by a cold isostatic pressing method (CIP).

The laminate 100 can be produced by laminating the negative electrode 120 on the solid electrolyte layer 130 provided on the positive electrode 110 as described above by using a known method so that the negative electrode active material layer 121 comes into contact with the surface of the solid electrolyte layer 130.

[Examples]

Next, the present invention will be described in more detail with reference to examples.

<Measurement of Requirement (1)>

First, 500 g of LiMO powder was weighed and put into a measuring instrument of multi functional powder properties Multi Tester MT-02 manufactured by SEISHIN ENTERPRISE Co., Ltd.. After that, the angle of repose and the angle of fall were automatically measured, and the angle of difference was calculated.

<Measurement of Requirement (2)>

First, the LiMO powder was placed on a conductive sheet attached onto a sample stage, and SEM observation was carried out by radiating an electron beam with an accelerated voltage of 20 kV using a JSM-5510 manufactured by JEOL Ltd. 50 primary particles were randomly selected in an image (SEM photograph) obtained from the SEM observation, parallel lines were drawn from a certain direction so as to sandwich the projection image of each primary particle, and the distance between the parallel lines (Feret diameter) was measured as the primary particle diameter. The arithmetic average value of the obtained particle diameters of the primary particle was the average primary particle diameter.

<Measurement of Requirement (3)>

The amount of water was measured using a coulometric method curl fisher moisture meter (831 Coulometer, manufactured by Metrohm Ltd.).

<Composition analysis>

The composition analysis of LiMO powder produced by the method described later was carried out using an ICP emission spectrophotometer (SPS3000 manufactured by SII Nanotechnology Inc.) after the obtained LiMO powder was dissolved in hydrochloric acid.

<Evaluation of kneading property>

LiMO powder obtained by the production method described later, a conductive material (acetylene black) and a binder (5% by mass PVdF as a solute and 95% by mass N-methyl-2-pyrrolidone as a solvent.) were mixed so as to achieve a composition of LiMO powder: conductive material: PVdF = 92: 5: 3 (mass ratio).

Then, a paste-like positive electrode mix was prepared by kneading using a planetary stirring/defoaming device (Kurabo Industries, Ltd. Mazelstar KK-250S).

The obtained paste-like positive electrode mix was evaluated according to the following criteria in the powder dispersibility measurement according to JIS K5600-2-5: 1999.

Specifically, kneading property was evaluated by the following method.

First, a grind meter was used for evaluation. On the surface of the grind meter, a groove is provided in which the depth increases by a constant value from 0 at one end to the maximum value at other end. When the paste-like positive electrode mix is skied from the maximum depth side with a scraper, linear marks and/or granular marks remain in the grooves having a depth corresponding to the size of the aggregation. The size of the aggregation in the paste-like positive electrode mix was evaluated based on the depth ($\mu$m) of the grooves at the positions where the linear marks and/or granular marks were formed.

Specifically, when the value of the depth at which the linear marks and/or granular marks were formed was more than 35 $\mu$m and 50 $\mu$m or less, it was evaluated as "B", and it was evaluated that there were few aggregations and the kneading property was high.

Further, when the value of the depth at which linear marks and/or granular marks were formed was 35 $\mu$m or less, it was evaluated as "A", and it was evaluated that there were less aggregations and the kneading property was higher.

On the contrary, when the value of the depth at which linear marks and/or granular marks were formed was more than 50 $\mu$m, it was evaluated as "C", and it was evaluated that the kneading property was low due to the presence of aggregations.

The results are shown in Table 3 below.

<Particle size distribution measurement>

0.1 g of a LiMO powder to be measured was added to 50 ml of a 0.2% by mass aqueous sodium hexametaphosphate solution to obtain a dispersion liquid in which the LiMO powder was dispersed. The obtained dispersion was subjected to a particle size distribution measurement using Mastersizer 2000, manufactured by Malvern Instruments Ltd. (laser scattering particle size distribution measuring apparatus), whereby the volume-based particle size distribution curve was obtained. From the obtained cumulative particle size distribution curve, the particle sizes at 10% cumulation was determined as the 10% cumulative particle size $D_{10}$ of the LiMO powder. Further, from the obtained cumulative particle size distribution curve, the particle sizes at 20% cumulation was determined as the 20% cumulative particle size $D_{20}$ of the LiMO powder. Further, from the obtained cumulative particle size distribution curve, the particle sizes at 50% cumulation was determined as the 50% cumulative particle size $D_{50}$ of the LiMO powder. Further, the difference ($D_{20}$ - $D_{10}$) between the values of $D_{20}$ and $D_{10}$ was calculated.

<BET specific surface area>

The BET specific surface area (unit:$m^2$/g) was measured using Macsorb (registered trademark) manufactured by MOUNTECH Co., Ltd. after 1 g of the LiMO powder was dried at 105°C in a nitrogen atmosphere for 30 minutes.

<Amount of sulfate radical>

After dissolving the LiMO powder in hydrochloric acid, inductively coupled plasma emission spectrometry (ICP) was performed to measure the sulfur atomic weight. Next, the measured sulfur atomic weight was converted into sulfate radical to obtain the amount of sulfate radical.

<<Example 1 >>

- Production of LiMO powder 1

After putting water in a reaction vessel equipped with a stirrer and an overflow pipe, an aqueous sodium hydroxide solution was added, and the liquid temperature was maintained at 60°C.

An aqueous nickel sulfate solution, an aqueous cobalt sulfate solution, an aqueous manganese sulfate solution, and a zirconium sulfate solution were mixed so that the atomic ratio of nickel atoms, cobalt atoms, manganese atoms and zirconium atoms was 0.60: 0.20: 0.195: 0.005 to prepare a raw material mixture solution.

Next, the raw material mixture solution and an aqueous ammonium sulfate solution as a complexing agent were continuously added into the reaction vessel under stirring, and nitrogen gas was continuously ventilated into the reaction vessel. A 10% by mass aqueous sodium hydroxide solution was appropriately added dropwise so that the pH of the solution in the reaction vessel became 11.8 (measured value at an aqueous solution temperature of 40°C).

The dropping rate of the aqueous sodium hydroxide solution was adjusted so that the pH of the solution in the reaction vessel became the set value ± 0.2. Further, the sum of the volumetric flow rate of the aqueous sodium hydroxide solution and the volumetric flow rate of the complexing agent was set smaller than the volumetric flow rate of the raw material mixture solution. Nickel cobalt manganese zirconium composite hydroxide particles were obtained. The obtained nickel cobalt manganese zirconium composite hydroxide particles were washed and then dehydrated with a centrifugal separator, washed, dehydrated, isolated, and dried at 105°C, followed by a crushing treatment using a rotary millstone to obtain a nickel cobalt manganese zirconium composite hydroxide 1.

The nickel cobalt manganese zirconium composite hydroxide 1 and a lithium hydroxide powder were weighed and mixed so that Li / (Ni + Co + Mn + Zr) = 1.05, and then calcined at 650°C for 5 hours in an oxygen atmosphere. The calcined product was crushed, and then calcined at 970°C for 5 hours in an oxygen atmosphere to obtain the raw material compound 1.

Then, the raw material compound 1 was heat-treated at 400°C for 5 hours in an oxygen atmosphere to obtain LiMO powder 1.

As a result of powder X-ray diffraction of the obtained lithium LiMO powder 1, it was confirmed that the LiMO powder 1 had a crystal structure having a layered structure.

As a result of SEM observation of the obtained LiMO powder 1, it was confirmed that the LiMO powder 1 had primary particles.

Chemical composition of LiMO powder 1, ratio (Ni/(Ni+X)) of amount of nickel with respect to total amount of nickel and element X obtained from chemical composition, angle of repose, angle of fall, angle of difference, BET specific surface area, average primary particle diameter, average particle diameter $D_{50}$, $D_{20}$-$D_{10}$, amount of sulfate radical, amount of water, and result of kneading property are shown in Table 1, Table 2, and Table 3.

<<Example 2»

- Production of LiMO powder 2

After putting water in a reaction vessel equipped with a stirrer and an overflow pipe, an aqueous sodium hydroxide solution was added, and the liquid temperature was maintained at 60°C.

An aqueous nickel sulfate solution, an aqueous cobalt sulfate solution, an aqueous manganese sulfate solution, and a zirconium sulfate solution were mixed so that the atomic ratio of nickel atoms, cobalt atoms, manganese atoms and zirconium atoms was 0.55: 0.21: 0.235: 0.005 to prepare a raw material mixture solution.

Next, the raw material mixture solution and an aqueous ammonium sulfate solution as a complexing agent were continuously added into the reaction vessel under stirring, and nitrogen gas was continuously ventilated into the reaction vessel. A 10% by mass aqueous sodium hydroxide solution was appropriately added dropwise so that the pH of the solution in the reaction vessel became 11.5 (measured value at an aqueous solution temperature of 40°C).

The dropping rate of the aqueous sodium hydroxide solution was adjusted so that the pH of the solution in the reaction vessel became the set value ± 0.2. Further, the sum of the volumetric flow rate of the aqueous sodium hydroxide solution and the volumetric flow rate of the complexing agent was set smaller than the volumetric flow rate of the raw material mixture solution. Nickel cobalt manganese zirconium composite hydroxide particles were obtained. The obtained nickel cobalt manganese zirconium composite hydroxide particles were washed and then dehydrated with a centrifugal separator, washed, dehydrated, isolated, and dried at 105°C, followed by a crushing treatment using a rotary millstone to obtain a nickel cobalt manganese zirconium composite hydroxide 2.

The nickel cobalt manganese zirconium composite hydroxide 2 and a lithium hydroxide powder were weighed and mixed so that Li / (Ni + Co + Mn + Zr) = 1.07, and then calcined at 650°C for 5 hours in an oxygen atmosphere. The calcined product was crushed, and then calcined at 970°C for 5 hours in an oxygen atmosphere to obtain the raw material compound 2.

Then, the raw material compound 2 was heat-treated at 400°C for 5 hours in an oxygen atmosphere to obtain LiMO powder 2.

As a result of powder X-ray diffraction of the obtained LiMO powder 2, it was confirmed that the LiMO powder 2 had a crystal structure having a layered structure.

As a result of SEM observation of the obtained LiMO powder 2, it was confirmed that the LiMO powder 2 had primary particles.

Chemical composition of LiMO powder 2, ratio (Ni/(Ni+X)) of amount of nickel with respect to total amount of nickel and element X obtained from chemical composition, angle of repose, angle of fall, angle of difference, BET specific surface area, average primary particle diameter, average particle diameter $D_{50}$, $D_{20}$-$D_{10}$, amount of sulfate radical, amount of water, and result of kneading property are shown in Table 1, Table 2, and Table 3.

<<Example 3>>

- Production of LiMO powder 3

After putting water in a reaction vessel equipped with a stirrer and an overflow pipe, an aqueous sodium hydroxide solution was added, and the liquid temperature was maintained at 40°C.

An aqueous nickel sulfate solution, an aqueous cobalt sulfate solution, and an aqueous manganese sulfate solution were mixed so that the atomic ratio of nickel atoms, cobalt atoms, and manganese atoms was 0.80: 0.15: 0.05 to prepare a raw material mixture solution.

Next, the raw material mixture solution and an aqueous ammonium sulfate solution as a complexing agent were continuously added into the reaction vessel under stirring, and nitrogen gas was continuously ventilated into the reaction vessel. A 10% by mass aqueous sodium hydroxide solution was appropriately added dropwise so that the pH of the solution in the reaction vessel became 11.1 (measured value at an aqueous solution temperature of 40°C).

The dropping rate of the aqueous sodium hydroxide solution was adjusted so that the pH of the solution in the reaction vessel became the set value ± 0.2. Further, the sum of the volumetric flow rate of the aqueous sodium hydroxide solution and the volumetric flow rate of the complexing agent was set smaller than the volumetric flow rate of the raw material mixture solution. Nickel cobalt manganese composite hydroxide particles were obtained. The obtained nickel cobalt manganese composite hydroxide particles were washed and then dehydrated with a centrifugal separator, washed, dehydrated, isolated, and dried at 105°C, followed by a crushing treatment using a rotary millstone to obtain a nickel cobalt manganese composite hydroxide 3.

The nickel cobalt manganese composite hydroxide 3 and a lithium hydroxide powder were weighed and mixed so that Li / (Ni + Co + Mn) = 1.02, and then calcined at 820°C for 8 hours in an oxygen atmosphere to obtain LiMO powder. The powder and pure water were mixed so that the ratio of the weight of the powder with respect to the total amount was 0.5, the produced slurry was stirred for 20 minutes and then dehydrated, isolated, and dried at 105°C, followed by a crushing treatment using a rotary millstone to obtain LiMO powder 3.

As a result of powder X-ray diffraction of the obtained LiMO powder 3, it was confirmed that the LiMO powder 3 had a crystal structure having a layered structure.

As a result of SEM observation of the obtained LiMO powder 3, it was confirmed that the LiMO powder 3 had primary particles.

Chemical composition of LiMO powder 3, ratio (Ni/(Ni+X)) of amount of nickel with respect to total amount of nickel and element X obtained from chemical composition, angle of repose, angle of fall, angle of difference, BET specific surface area, average primary particle diameter, average particle diameter $D_{50}$, $D_{20}$-$D_{10}$, amount of sulfate radical, amount of water, and result of kneading property are shown in Table 1, Table 2, and Table 3.

<<Comparative Example 1>>

- Production of LiMO powder 4

After putting water in a reaction vessel equipped with a stirrer and an overflow pipe, an aqueous sodium hydroxide solution was added, and the liquid temperature was maintained at 60°C.

An aqueous nickel sulfate solution, an aqueous cobalt sulfate solution, an aqueous manganese sulfate solution, and a zirconium sulfate solution were mixed so that the atomic ratio of nickel atoms, cobalt atoms, manganese atoms and zirconium atoms was 0.60: 0.20: 0.195: 0.005 to prepare a raw material mixture solution.

Next, the raw material mixture solution and an aqueous ammonium sulfate solution as a complexing agent were continuously added into the reaction vessel under stirring, and nitrogen gas was continuously ventilated into the reaction vessel. A 30% by mass aqueous sodium hydroxide solution was appropriately added dropwise so that the pH of the solution in the reaction vessel became 11.8 (measured value at an aqueous solution temperature of 40°C).

Further, the sum of the volumetric flow rate of the aqueous sodium hydroxide solution and the volumetric flow rate of the complexing agent was set smaller than the volumetric flow rate of the raw material mixture solution. Nickel cobalt manganese zirconium composite hydroxide particles were obtained. The obtained nickel cobalt manganese zirconium composite hydroxide particles were washed and then dehydrated with a centrifugal separator, washed, dehydrated, isolated, and dried at 105°C, followed by a crushing treatment using a ball mill with zirconia balls as crushing media to obtain a nickel cobalt manganese zirconium composite hydroxide 4.

The nickel cobalt manganese zirconium composite hydroxide 4 and a lithium hydroxide powder were weighed and mixed so that Li / (Ni + Co + Mn + Zr) = 1.05, and then calcined at 650°C for 5 hours in an oxygen atmosphere. The calcined product was crushed, and then calcined at 970°C for 5 hours in an oxygen atmosphere to obtain the raw material compound 4.

Then, the raw material compound 4 was heat-treated at 400°C for 5 hours in an oxygen atmosphere to obtain LiMO powder 4.

As a result of powder X-ray diffraction of the obtained LiMO powder 4, it was confirmed that the LiMO powder 4 had a crystal structure having a layered structure.

As a result of SEM observation of the obtained LiMO powder 4, it was confirmed that the LiMO powder 4 had primary particles.

Chemical composition of LiMO powder 4, ratio (Ni/(Ni+X)) of amount of nickel with respect to total amount of nickel and element X obtained from chemical composition, angle of repose, angle of fall, angle of difference, BET specific surface area, average primary particle diameter, average particle diameter $D_{50}$, $D_{20}$-$D_{10}$, amount of sulfate radical, amount of water, and result of kneading property are shown in Table 1, Table 2, and Table 3.

<<Comparative Example 2>>

- Production of LiMO powder 5

After putting water in a reaction vessel equipped with a stirrer and an overflow pipe, an aqueous sodium hydroxide solution was added, and the liquid temperature was maintained at 50°C.

An aqueous nickel sulfate solution, an aqueous cobalt sulfate solution, an aqueous manganese sulfate solution, and a zirconium sulfate solution were mixed so that the atomic ratio of nickel atoms, cobalt atoms, manganese atoms and zirconium atoms was 0.55: 0.21: 0.235: 0.005 to prepare a raw material mixture solution.

Next, the raw material mixture solution and an aqueous ammonium sulfate solution as a complexing agent were continuously added into the reaction vessel under stirring, and nitrogen gas was continuously ventilated into the reaction vessel. A 5% by mass aqueous sodium hydroxide solution was appropriately added dropwise so that the pH of the solution in the reaction vessel became 11.6 (measured value at an aqueous solution temperature of 40°C). The dropping rate of the aqueous sodium hydroxide solution was adjusted so that the pH of the solution in the reaction vessel became the set value $\pm$ 0.2.

Further, the sum of the volumetric flow rate of the aqueous sodium hydroxide solution and the volumetric flow rate of the complexing agent was set larger than the volumetric flow rate of the raw material mixture solution. Nickel cobalt manganese zirconium composite hydroxide particles were obtained. The obtained nickel cobalt manganese zirconium composite hydroxide particles were washed and then dehydrated with a centrifugal separator, washed, dehydrated, isolated, and dried at 105°C, followed by a crushing treatment using a rotary millstone to obtain a nickel cobalt manganese zirconium composite hydroxide 5.

The nickel cobalt manganese zirconium composite hydroxide 5 and a lithium hydroxide powder were weighed and mixed so that Li / (Ni + Co + Mn + Zr) = 1.07, and then calcined at 650°C for 5 hours in an oxygen atmosphere. The calcined product was crushed, and then calcined at 970°C for 5 hours in an oxygen atmosphere to obtain the raw material compound 5.

Then, the raw material compound 5 was heat-treated at 400°C for 5 hours in an oxygen atmosphere to obtain LiMO powder 5.

As a result of powder X-ray diffraction of the obtained LiMO powder 5, it was confirmed that the LiMO powder 5 had a crystal structure having a layered structure.

As a result of SEM observation of the obtained LiMO powder 5, it was confirmed that the LiMO powder 5 had primary particles.

Chemical composition of LiMO powder 5, ratio (Ni/(Ni+X)) of amount of nickel with respect to total amount of nickel and element X obtained from chemical composition, angle of repose, angle of fall, angle of difference, BET specific surface area, average primary particle diameter, average particle diameter $D_{50}$, $D_{20}$-$D_{10}$, amount of sulfate radical, amount of water, and result of kneading property are shown in Table 1, Table 2, and Table 3.

<<Comparative Example 3>>

- Production of LiMO powder 6

After putting water in a reaction vessel equipped with a stirrer and an overflow pipe, an aqueous sodium hydroxide solution was added, and the liquid temperature was maintained at 40°C.

An aqueous nickel sulfate solution, an aqueous cobalt sulfate solution, and an aqueous manganese sulfate solution were mixed so that the atomic ratio of nickel atoms, cobalt atoms, and manganese atoms was 0.80: 0.15: 0.05 to prepare a raw material mixture solution.

Next, the raw material mixture solution and an aqueous ammonium sulfate solution as a complexing agent were continuously added into the reaction vessel under stirring, and nitrogen gas was continuously ventilated into the reaction vessel. A 5% by mass aqueous sodium hydroxide solution was appropriately added dropwise so that the pH of the solution in the reaction vessel became 11.0 (measured value at an aqueous solution temperature of 40°C).

Further, the sum of the volumetric flow rate of the aqueous sodium hydroxide solution and the volumetric flow rate of the complexing agent was set larger than the volumetric flow rate of the raw material mixture solution. Nickel cobalt manganese composite hydroxide particles were obtained. The obtained nickel cobalt manganese composite hydroxide particles were washed and then dehydrated with a centrifugal separator, washed, dehydrated, isolated, and dried at 105°C, followed by a crushing treatment using a rotary millstone to obtain a nickel cobalt manganese composite hydroxide 6.

The nickel cobalt manganese composite hydroxide 6 and a lithium hydroxide powder were weighed and mixed so that Li / (Ni + Co + Mn) = 1.02, and then calcined at 920°C for 8 hours in an oxygen atmosphere to obtain LiMO powder. The powder and pure water were mixed so that the ratio of the weight of the powder with respect to the total amount was 0.5, the produced slurry was stirred for 20 minutes and then dehydrated, isolated, and dried at 105°C, followed by a crushing treatment using a rotary millstone to obtain LiMO powder 6.

As a result of powder X-ray diffraction of the obtained LiMO powder 6, it was confirmed that the LiMO powder 6 had a crystal structure having a layered structure.

As a result of SEM observation of the obtained LiMO powder 6, it was confirmed that the LiMO powder 6 had primary particles.

Chemical composition of LiMO powder 6, ratio (Ni/(Ni+X)) of amount of nickel with respect to total amount of nickel and element X obtained from chemical composition, angle of repose, angle of fall, angle of difference, BET specific surface area, average primary particle diameter, average particle diameter $D_{50}$, $D_{20}$-$D_{10}$, amount of sulfate radical, amount of water, and result of kneading property are shown in Table 1, Table 2, and Table 3.

[Table 1]

| | Ni/(Ni+X) | Angle of Repose | Angle of Fall | Angle of Difference | Composition Formula | | |
|---|---|---|---|---|---|---|---|
| | | ° | ° | ° | m | n | x |
| Ex. 1 | 0.60 | 37.6 | 26.6 | 11.0 | 0.01 | 0.40 | Co, Mn, Zr |
| Ex. 2 | 0.55 | 33.3 | 27.8 | 5.5 | 0.02 | 0.45 | Co, Mn, Zr |
| Ex. 3 | 0.85 | 29.0 | 20.1 | 8.9 | 0.01 | 0.15 | Co, Mn |
| Comp. Ex. 1 | 0.60 | 53.6 | 38.2 | 15.4 | 0.02 | 0.40 | Co, Mn, Zr |
| Comp. Ex. 2 | 0.55 | 43.4 | 22.0 | 21.4 | 0.02 | 0.45 | Co, Mn, Zr |
| Comp. Ex. 3 | 0.85 | 66.6 | 44.0 | 22.6 | 0.00 | 0.15 | Co, Mn |

[Table 2]

| | Composition (Composition Analysis Value) | | | |
|---|---|---|---|---|
| | Ni | Co | Mn | Zr |
| Ex. 1 | 0.60 | 0.20 | 0.19 | 0.01 |
| Ex. 2 | 0.55 | 0.21 | 0.23 | 0.01 |
| Ex. 3 | 0.85 | 0.10 | 0.05 | 0.00 |
| Comp. Ex. 1 | 0.60 | 0.20 | 0.19 | 0.01 |
| Comp. Ex. 2 | 0.55 | 0.21 | 0.23 | 0.01 |
| Comp. Ex. 3 | 0.85 | 0.10 | 0.05 | 0.00 |

[Table 3]

| | Average Primary Particle Diameter | Average Diameter $D_{50}$ | BET specific surfaec area | $D_{20}-D_{10}$ | Amount of sulfate radic al | Amount of water | Kneading Property | |
|---|---|---|---|---|---|---|---|---|
| | $\mu$m | $\mu$m | m$^2$/g | $\mu$m | wt% | ppm | Size of Aggregation ($\mu$m) | Evaluation |
| Ex. 1 | 2.1 | 4.1 | 0.8 | 0.8 | 0.32 | 330 | 38 | B |
| Ex. 2 | 1.8 | 3.7 | 0.9 | 0.7 | 0.68 | 540 | 25 | A |
| Ex. 3 | 3.3 | 8.4 | 0.4 | 0.5 | 0.21 | 678 | 33 | A |
| Comp. Ex. 1 | 1.8 | 4.0 | 0.7 | 1.1 | 0.77 | 253 | 68 | C |
| Comp. Ex. 2 | 0.8 | 2.8 | 1.1 | 1.3 | 1.10 | 444 | 72 | C |
| Comp. Ex. 3 | 0.8 | 11.4 | 0.2 | 2.2 | 2.30 | 1130 | 88 | C |

As shown in the above results, Examples 1 to 3 to which the present invention was applied had higher kneading property than Comparative Examples 1 to 3.

[Reference Signs List]

1: Separator; 2: Positive electrode; 3: Negative electrode; 4: Electrode group; 5: Battery can; 6: Electrolytic solution; 7: Top insulator; 8: Sealing body; 10: Lithium secondary battery; 21: Positive electrode lead; 31: Negative electrode lead; 100: Laminate; 110: Positive electrode; 111: Positive electrode active material layer; 112: Positive electrode current collector; 113: External terminal; 120: Negative electrode; 121: Negative electrode active material layer; 122: Negative electrode current collector; 123: External terminal; 130: Solid electrolyte layer; 200: Exterior body; 200a: Opening; 1,000: All-solid-state lithium secondary battery

**Claims**

1. A lithium metal composite oxide powder having a layered structure, and comprising at least Li, Ni, and an element X, wherein:

    said element X is at least one element selected from the group consisting of Co, Mn, Fe, Cu, Ti, Mg, Al, W, Mo, Nb, Zn, Sn, Zr, Ga, V, B, Si, S, and P; and

the lithium metal composite oxide powder satisfies requirements (1), (2), and (3):

(1) an angle of difference ($\theta$1- $\theta$2) calculated from an angle of repose ($\theta$1) and an angle of fall ($\theta$2) is 15° or less, wherein the angle of repose ($\theta$1) is an angle of slope of the lithium metal composite oxide powder piled on a measurement table, and the angle of fall ($\theta$2) is an angle of slope measured after application of a predetermined impact force to the measurement table;
(2) an average primary particle diameter is 1 $\mu$m or more; and
(3) an amount of water contained in the lithium metal composite oxide powder is 1000 ppm or less.

2.  The lithium metal composite oxide powder according to Claim 1,
    wherein the angle of repose ($\theta$1) is 40° or less.

3.  The lithium metal composite oxide powder according to Claim 1 or 2,
    wherein the angle of fall ($\theta$2) is 35° or less.

4.  The lithium metal composite oxide powder according to any one of Claims 1 to 3,
    wherein an amount of residual sulfate radical is 1.0% by mass or less.

5.  The lithium metal composite oxide powder according to any one of Claims 1 to 4,
    wherein a difference ($D_{20}$ - $D_{10}$) between values of 20% cumulative diameter ($D_{20}$) and 10% cumulative diameter ($D_{10}$) as determined by particle size distribution measurement is 1 $\mu$m or less.

6.  The lithium metal composite oxide powder according to any one of Claims 1 to 5,
    wherein the lithium metal composite oxide powder comprises core particles and a coating material covering the core particles.

7.  A positive electrode active material for a lithium secondary battery, which comprises the lithium metal composite oxide powder of any one of Claims 1 to 6.

8.  A positive electrode for a lithium secondary battery, which comprises the positive electrode active material of Claim 7.

9.  A lithium secondary battery comprising the positive electrode of Claim 8.

FIG. 1A

FIG. 1B

FIG. 2

## INTERNATIONAL SEARCH REPORT

| | International application No. |
|---|---|
| | PCT/JP2020/047166 |

**A. CLASSIFICATION OF SUBJECT MATTER**
C01G 53/00(2006.01)i; H01M 4/36(2006.01)i; H01M 4/505(2010.01)i; H01M 4/525(2010.01)i
FI: C01G53/00 A; H01M4/36 C; H01M4/505; H01M4/525
According to International Patent Classification (IPC) or to both national classification and IPC

**B. FIELDS SEARCHED**

Minimum documentation searched (classification system followed by classification symbols)
C01G53/00; H01M4/36; H01M4/505; H01M4/525

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-153435 A (SUMITOMO CHEMICAL CO., LTD.) 12 September 2019 (2019-09-12) | 1-9 |
| A | WO 2012/073551 A1 (JX NIPPON MINING & METALS CORP.) 07 June 2012 (2012-06-07) entire text, all drawings | 1-9 |
| A | WO 2019/131779 A1 (HITACHI METALS, LTD.) 04 July 2019 (2019-07-04) entire text, all drawings | 1-9 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 February 2021 (02.02.2021) | 09 February 2021 (09.02.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

International application No.

PCT/JP2020/047166

| Patent Documents referred in the Report | Publication Date | Patent Family | Publication Date |
|---|---|---|---|
| JP 2019-153435 A | 12 Sep. 2019 | WO 2019/168091 A1 | |
| WO 2012/073551 A1 | 07 Jun. 2012 | TW 201228084 A | |
| WO 2019/131779 A1 | 04 Jul. 2019 | KR 10-2020-0023468 A | |
| | | CN 111052463 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019227470 A
- JP 2001080920 A
- JP 2002201028 A
- WO 2019098384 A1
- US 20200274158 A1
- JP 2000030686 A
- US 20090111025 A1

- JP 2004095400 A
- WO 2020208872 A1
- US 20160233510 A1
- US 20120251871 A1
- US 20180159169 A1
- US 20200259213 A1